(19) Europäisches Patentamt

European Patent Office

Office européen des brevets

(11) Veröffentlichungsnummer: **0 278 248 B1**

(12) **EUROPÄISCHE PATENTSCHRIFT**

(45) Veröffentlichungstag der Patentschrift: **21.10.92**

(21) Anmeldenummer: **88100437.8**

(22) Anmeldetag: **14.01.88**

(51) Int. Cl.⁵: **F16F 9/30**, G10K 11/16, B32B 15/08

(54) **Verbundwerkstoff für die Schwingungsdämpfung und Körperschalldämpfung.**

(30) Priorität: **13.02.87 DE 3704506**

(43) Veröffentlichungstag der Anmeldung:
**17.08.88 Patentblatt 88/33**

(45) Bekanntmachung des Hinweises auf die Patenterteilung:
**21.10.92 Patentblatt 92/43**

(84) Benannte Vertragsstaaten:
**AT BE CH DE ES FR GB IT LI LU NL SE**

(56) Entgegenhaltungen:
**DE-B- 1 182 862**
**US-A- 3 058 704**
**US-A- 4 681 816**

(73) Patentinhaber: **Hoesch Stahl Aktiengesellschaft**
**Rheinische Strasse 173**
**W-4600 Dortmund 1(DE)**

(72) Erfinder: **Heuel, Wolfgang**
**Tucholskystrasse 27**
**W-4600 Dortmund 1(DE)**
Erfinder: **Meyer zu Bexten, Jobst Heinrich, Dr.**
**Holtweg 16**
**W-4770 Soest-Ostönnen(DE)**
Erfinder: **Müller, Rainer, Dipl.-Ing.**
**Kessebürener Dorfstrasse 7e**
**W-4750 Unna(DE)**
Erfinder: **Stamm, Klaus, Dr.**
**Pottenkamp 32**
**W-4600 Dortmund 30(DE)**

## Beschreibung

Die Erfindung betrifft einen Verbundwerkstoff für die Schwingungsdämpfung und Körperschalldämpfung, bei der Schichten aus hartem Werkstoff durch eine viskoelastische Zwischenschicht miteinander verbunden sind.

Aus der EP-A-167 455 ist ein derartigen Verbundwerkstoff bekannt, dessen schwingungsdämpfende Eigenschaften nur für einen bestimmten Temperaturbereich ausreichend wirksam sind. Dieser Bereich kann zu höheren oder niedrigeren Temperaturen verschoben werden, wenn als Zwischenschicht zwischen den Metallblechen ein Werkstoff mit bei höheren Temperaturen oder bei niedrigeren Temperaturen liegenden Erweichungsbereich gewählt wird. Der Werkstoff für die Zwischenschicht besteht meist aus Kunststoff oder ähnlichen Stoffen, denen oft auch staubförmige oder faserige Füllstoffe hinzugefügt werden.

Diese bekannten Verbundwerkstoffe versagen bei Anwendungsfällen, bei denen sowohl sehr niedrige als auch sehr hohe Betriebstemperaturen auftreten.

Es umfassen auch die am besten geeigneten Kunststoffe nur einen Temperaturbereich von maximal 50 °C, in dem sie ausreichend dämpfen.

Für Ölwannen von Kraftfahrzeugen wäre aber z. B. ein Bereich von 0 °C bis 130 °C erwünscht.

Es wurde versucht, einen größeren Arbeitsbereich der Verbundwerkstoffe dadurch zu erreichen, daß verschiedene Kunststoffe mit verschiedenen Arbeitsbereichen gemischt wurden und die Mischung als dämpfende Schicht eingesetzt wurde.

Dies bringt nicht den gewünschten Erfolg. Sofern überhaupt eine verarbeitbare Mischung hergestellt werden kann, verhält sich diese bei der Verlustfaktormessung wie ein neuer, quasi-homogener Stoff mit eigenem Dämpfungsmaximum in eigener Temperaturlage $T_m$ zwischen den $T_m$-Werten der Ausgangskunststoffe und mit eigener, jedoch nicht grundsätzliche größerer Breite des Arbeitsbereiche $T_u...T_o$.

Als ungeeignet erweist sich auch der Weg, zwei oder mehrere Kunststoff übereinander geschichtet, etwa als Verbund- bzw. Mehrlagen-Folie - zu verwenden. Ein Grund für das Scheitern dieser Idee kann z. B. sein, daß, wenn zumindest bei höherer Temperatur Mischbarkeit vorliegt, beim Aufschmelzen einer der Einzelschichten sich eine Mischung nach dem vorgenannten Beispiel ergibt, so daß das gewünschte Ziel wiederum nicht erreicht ist. Aber auch im an sich günstigeren Fall, wenn selbst bei höheren Einsatztemperaturen eine Mischung der Verbundschichten nicht eintritt, bleibt der Erfolg insofern aus, als im oberen Temperaturbereich die von der entsprechenden Kunststoffschicht erwartete Dämpfung nicht erreicht wird, weil dann die für die unteren Temperaturen eingesetzte Masse bereits eine so niedrige Viskosität hat, daß sie die für die Umwandlung der Schwingungsenergie in Wärmeenergie notwendige Schubkrafteinleitung in die andere Kunststoffschicht - obgleich diese sich im richtigen rheologischen Zustand befindet - nicht leisten kann.

Es ist auch meistens nicht möglich, eine über einen sehr großen Temperaturbereich sich erstreckende Dämpfung dadurch zu erreichen, daß zwei Verbundwerkstoffe mit verschiedenen Dämpfungsbereichen gekoppelt werden, um eine Addition beider Bereiche zu erhalten. Eine solche Kopplung wäre z. B. bei einer Maschinenverkleidung denkbar. Es könnte z. B. die Maschinenverkleidung doppelt ausgeführt werden mit einer inneren Verkleidung, die für hohe Temperaturen geeignet ist und einer äußeren Verkleidung, die bei niedrigen Temperaturen dämpft. Eine solche Kombination wäre darüber hinaus wegen der doppelten Ausführung der Maschinenverkleidung schwierig herzustellen.

Es müßten zwischen beiden Verkleidungen Abstandhalter eingebaut werden, die die Wirkung der Schalldämpfung vermindern. Eine solche Lösung wäre nicht möglich bei PKW-Bodenblechen, Ölwannen und Zylinderkopfhauben. Diese müssen aus Gründen des fehlenden Platzes, der Wärmeleitung und der Herstellung durch z. B. Tiefziehen einwandig ausgeführt werden.

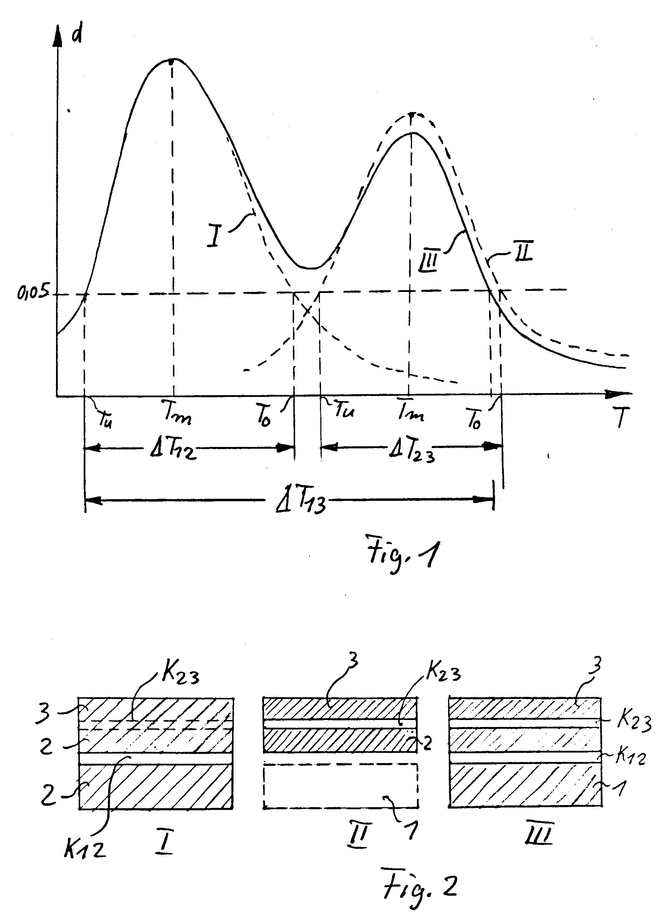

Es ist deshalb die Aufgabe der vorliegenden Erfindung, einen Verbundwerkstoff zu erhalten, dessen Dämpfungsbereich einen sehr breiten Temperaturbereich oder auch mehrere Temperaturbereiche bei sehr hohen Dämpfungseigenschaften beinhaltet, der wenig Platz beansprucht und der leicht verarbeitbar ist. Diese Aufgabe wird entsprechend dem kennzeichnenden Teil des Anspruches 1 gelöst. Weiterbildungen sind in den Unteransprüchen 2 bis 9 enthalten. Ein Anwendungsbeispiel wird anhand der Fig. 1 und 2 beschrieben.

Die Fig. 1 enthält die Verlustfaktorkurven in Abhängigkeit von der Temperatur T der in Fig. 2 dargestellten Verbundwerkstoffe I, II und III. Der Verbundwerkstoff III entspricht dem Gegenstand der Erfindung. Er verhält sich bei niedriger Temperatur wie der Verbundwerkstoff I.

Die beiden Stahlbleche 2 und 3 wirken dort wie ein dickes Blech, weil die dort gestrichelt angedeutete Zwischenschicht K 23 bei dieser Temperatur sehr hart und wenig elastisch ist. Die Dämpfung wird durch die Zwischenschicht K 12 bewirkt.

Die zugehörige Dämpfungskurve ist in Fig. 1 mit I bezeichnet. Bei erhöhter Temperatur verhält sich die Verbundwerkstoff III wie der Verbundwerkstoff II. Dort ist jetzt die Zwischenschicht K 23 ausreichend viskoelastisch und bewirkt eine ausreichende Dämpfung der Stahlbleche 2 und 3. Das Blech 1 ist an dieses dämpfende System durch die fast flüssige und jetzt nicht dämpfende Zwischenschicht K 12 mit seiner Masse angekoppelt, wodurch es ausreichend mit gedämpft wird. Die Dämpfung des Verbundwerkstoffes II ist in der Fig. 1 als Kurve II über der Temperatur eingezeichnet.

In der Fig. 1 stellt die Kurve III die Dämpfung des Verbundwerkstoffes III dar.

Die nach dieser Erfindung hergestellten Werkstoffe sind vor allem in der Ausführungsform interessant, bei der die Kunststoffe K 12 und K 23 so ausgewählt sind, daß sie günstiges Dämpfungsverhalten für benachbarte Temperaturbereich $\Delta T_{12}$ und $\Delta T_{23}$, wie in Fig. 1 dargestellt, einbringen. Dann ergibt sich ein sehr breiter Arbeitsbereich, im wesentlichen entsprechend der Summe $\Delta T_{12} + \Delta T_{23}$. Es sind aber auchh Ausführungsformen möglich, bei denen die Bereiche $\Delta T_{12}$ und $\Delta T_{23}$ so weit auseinanderliegen, daß die Dämpfungscharakteristik des Werkstoffs durch zwei diskrete Arbeitsbereiche gekennzeichnet ist.

Der Gefahr, daß bei Erreichen des oberen Temperatur-Arbeitsbereiches $\Delta T_{23}$ der für den unteren Temperatur-Arbeitsbereich $\Delta T_{12}$ eingesetzte Kunststoff K 12 wegen starker Verminderung der Viskosität an den Rändern der Verbundtafel austropft, kann - sofern überhaupt notwendig - leicht durch konstruktive Maßnahmen wie z. B. Umbördelungen, Falze, Rollnähte, Schweißpunktfolgen oder Versiegelungen begegnet werden.

Die Erfindung ist auch mit mehr als 3 Stahlblechen oder anderen relativ harten Schichten und mehr als 2 Kunststoffschichten ausführbar. Es sind z. B. auch 4 Stahlbleche möglich, die von 3 Kunststoffschichten aneinandergehalten werden. Die Zwischenschichten sind in der Regel erheblich dünner als die Schichten aus hartem Werkstoff.

Wenn der erfindungsgemäße Verbundwerkstoff z. B. zum Kapseln von Maschinen eingesetzt wird, so tritt noch ein weiterer Vorteil durch eine gegenüber herkömmlichem Verbundwerkstoff verminderte Abstrahlung von Schall an die Umgebungsluft auf.

Der erfindungsgemäße fünf- oder mehrschichtige Verbundwerkstoff weist nun bei gleicher Masse eine deutlich kleinere Biegesteifigkeit B als dreischichtiger Verbundwerkstoff oder gar als Einschichtmaterial z. B. Feinblech auf; dies gilt besonders im oberen Temperaturbereich. Demzufolge ergibt sich eine höhere Koinzidenzgrenzfrequenz $f_g$ und damit ein niedrigerers Luftschall-Abstrahlmaß $\delta$ als bei gleichschweren dreischichtigem Verbundwerkstoff oder Einschichtmaterial. Um also die gleiche Luftschallpegelminderung wie z. B. bei dreischichtigem Verbundwerkstoff zu erreichen, genügt bei fünf- oder mehrschichtigem Verbundwerkstoff bereits eine geringere Dämpfung d, insbesondere im oberen Tempraturbereich. Dies ist insofern von Vorteil, als erfahrungsgemäß gerade im oberen Temperaturbereich z. B. bei 70 bis 130 °C die Dämpfung d der bekannten viskoelastischen Kunststoffe unter den Werten entsprechender viskoelastischer Kunststoffe für den unteren Temperaturbereich liegen.

Schließlich sei noch auf einen weiteren Vorzug des erfindungsgemäßen Verbundwerkstoffes hingewiesen. Auch bei Luftschall-Dämmungsmäßnahmen kommt es neben hoher Masse $\mu$ auf eine möglichst große Koinzidenzgrenzfrequenz $f_g$ an, um Koinzidenzeinbrüche des Schalldämmmaßes R innerhalb des akustisch bedeutsamen Frequenzbereiches von etwa 100 - 3.200 Hz zu vermeiden. Gerade diese Eigenschaft weist aber der erfindungsgemäße fünf-oder mehrschichtige Verbundwerkstoff auf - wie vorangehend bereits erläutert. Er eignet sich daher auch für Luftschall-Dämmungsmäßnahmen, z. B. Lärmschutzkapselungen von Maschinen. Seine Wirkung wird noch verstärkt bei der Kombination mit zusätzlichen Luftschall-Dämpfungsmaßnahmen wie z. B. der Anbringung schallschluckender Beläge.

**Patentansprüche**

1. Verbundwerkstoff für die Schwingungsdämpfung und Körperschalldämpfung, bei der Schichten (1, 2, 3) aus hartem Werkstoff durch eine viskoelastische Zwischenschicht (K 12, K 23) miteinander verbunden sind, dadurch gekennzeichnet, daß der Verbundwerkstoff aus mehr als zwei harten (1, 2, 3) durch jeweils eine viskoelastische Zwischenschicht (K 12, K 23) verbundenen Schicht besteht und die Bereiche maximaler Dämpfung oder Erweichungsbereiche der viskoelastischen Zwischenschichten (K 12, K 23) in verschieden hohen Temperaturbereichen liegen.

2. Verbundwerkstoff nach Anspruch 1, dadurch gekennzeichnet, daß die Schichten aus hartem Werkstoff (1, 2, 3) aus Stahlblech und die viskoelastischen Zwischenschichten (K 12, K 23) aus Kunststoff bestehen.

3. Verbundwerkstoff nach den Ansprüchen 1 und 2, dadurch gekennzeichnet, daß dieser aus 3 Stahlblechen (1, 2, 3) besteht, die mit viskoelastischen Zwischenschichten (K 12, K 23) verbunden sind.

4. Verbundwerkstoff nach den Ansprüchen 1 bis 3, dadurch gekennzeichnet, daß die Dämpfungsbereiche der viskoelastischen Zwischenschichten (K 12, K 23) aneinander grenzen oder sich auch teilweise überschneiden und bei einer bestimmten mittleren Temperatur der für unterhalb dieser ausgelegte Dämpfungsbereich der viskoelastischen Zwischenschicht (K 12) noch mindestens 10 % bis 30 % seiner maximalen Dämpfung besitzt, während der für oberhalb dieser bestimmten Temperatur ausgelegte Dämpfungsbereich der anderen viskoelastischen Zwischenschicht (K 23) bereits 10 % bis 30 % seiner maximalen Dämpfung besitzt.

5. Verbundwerkstoff nach den Ansprüchen 1 bis 3, dadurch gekennzeichnet, daß die Dämpfungsbereiche soweit auseinander liegen, daß zwischen den Dämpfungsbereichen eine Dämpfungslücke entsteht, bei der weniger als 10 % der maximal wirksamen Dämpfung vorhanden ist.

6. Verbundwerkstoff nach den Ansprüchen 1 bis 5, dadurch gekennzeichnet, daß die Schichten aus hartem Werkstoff (1, 2, 3) von unterschiedlicher Dicke sind.

7. Verbundwerkstoff nach den Ansprüchen 1 bis 6, dadurch gekennzeichnet, daß die viskoelastischen Zwischenschichten (K 12, K 23) von unterschiedlicher Dicke sind.

8. Verbundwerkstoff nach den Ansprüchen 1 bis 7, dadurch gekennzeichnet, daß der harte Werkstoff aus drei Stahlblechen besteht, deren Dickenverhältnis genau oder angenähert 2 : 1 : 1 beträgt, wobei das dickste Stahlblech (1) mit der viskoelastischen Zwischenschicht (K 12) verbunden ist, die für eine niedrigere Arbeitstemperatur als die übrige Zwischenschicht ausgelegt ist.

9. Verbundwerkstoff nach den Ansprüchen 1 bis 8, dadurch gekennzeichnet, daß eine oder beide Außenflächen des Verbundwerkstoffes mit einem schallschluckenden Außenbelag beschichtet sind.

## Claims

1. Composite material for damping vibration and damping structure-borne noise where the layers (1, 2, 3) made in hard material are joined to each other by a visco-elastic intermediate layer (K 12, K 23) characterised in that the composite material comprises more than two hard (1, 2, 3) layers connected in each case by a visco-elastic intermediate layer (K 12, K 23) and the ranges of maximum damping effect or softening ranges of the visco-elastic intermediate layers (K 12, K 23) lie in the different temperature ranges.

2. Composite material as claimed in claim 1, characterised in that the layers consist of a hard material (1, 2, 3), of steel sheet and the visco-elastic intermediate layers (K 12, K 23) consist of synthetic material.

3. Composite material as claimed in claim 1 and 2 characterised in that these comprise three steel sheets (1, 2, 3) which are connected with visco-elastic intermediate layers (K 12, K 23).

4. Composite material as claimed in the claims 1 through 3 characterised in that the damping range of the visco-elastic intermediate layers (K 12, K 23), verge on each other and sometimes even cross over and at a certain average temperature the damping range, designed for below this temperature, of the visco-elastic intermediate layer (K 12) has at least 10% to 30% of its maximum damping effect, while the damping range, designed for above this certain temperature, of the other visco-elastic intermediate layer (K 23) already has 10% to 30% of its maximum damping effect.

5. Composite material as claimed in claims 1 through 3 characterised in that the damping ranges are so far apart that between the damping ranges there is a gap in the damping where there is less than 10% of the maximum damping effect.

6. Composite material as claimed in claims 1 through 5 characterised in that the layers of hard material (1, 2, 3) are of different thicknesses.

7. Composite material as claimed in the claims 1 through 6 characterised in that the visco-elastic intermediate layers (K 12, K 23) are of different thicknesses.

8. Composite material as claimed in claims 1 through 7 characterised in that the hard material comprises three steel sheets, whose thickness ratio amounts to exactly or almost 2:1:1 and the thickest steel plate (1) is connected to the visco-elastic intermediate layer (K 12) which is designed for a lower working temperature than the other intermediate layer.

9. Composite material as claimed in claims 1 through 8 characterised in that the one or both outer surfaces of the composite material are covered with a sound absorbing outer layer.

## Revendications

1. Matériau composite pour l'amortissement des vibrations et du bruit, dont les couches (1, 2, 3) en matériau dur sont reliées entre elles par une couche intermédiaire (K12, K23) visco-élastique, caractérisé en ce que le matériau composite comprend plus de deux couches dures (1, 2, 3), chacune étant reliée à l'autre par une couche intermédiaire visco-élastique (K 12, K 23), et que les domaines d'amortissement maximum ou les domaines de ramollissement des couches intermédiaires visco-élastiques (K 12, K 23) se situent dans des intervalles de température élevés différents.

2. Matériau composite selon la revendication 1, caractérisé en ce que les couches en matériau dur (1, 2, 3) sont formées de tôle d'acier, tandis que les couches intermédiaires visco-élastiques (K 12, K 23) sont formées de matière plastique.

3. Matériau composite selon les revendications 1 et 2, caractérisé en ce que celui-ci comprend 3 tôles d'acier (1, 2, 3), qui sont reliées au moyen de couches intermédiaires visco-élastiques (K 12, K 23).

4. Matériau composite selon les revendications 1 à 3, caractérisé en ce que les domaines d'amortissement des couches intermédiaires visco-élastiques (K12, K 23) sont contigüs, ou bien se chevauchent partiellement et, à une température moyenne déterminée, le domaine d'amortissement de la couche intermédiaire visco-élastique (K 12) conçue pour des températures inférieures à cette température moyenne, donne encore 10 à 30 % de son amortissement maximal, tandis que le domaine d'amortissement de l'autre couche intermédiaire visco-élastique (K 23) conçue pour des températures supérieures à cette température moyenne, donne déjà 10 à 30 % de son amortissement maximal.

5. Matériau composite selon les revendications 1 à 3, caractérisé en ce que les domaines d'amortissement sont tellement éloignés l'un de l'autre, qu il existe entre eux une lacune d'amortissement, dans laquelle on trouve moins de 10 % de l'amortissement effectif maximal.

6. Matériau composite selon les revendications 1 à 5, caractérisé en ce que les couches en matériau dur (1, 2, 3) sont d'épaisseur différente.

7. Matériau composite selon les revendications 1 à 6, caractérisé en ce que les couches intermédiaires viscoélastiques (K 12, K 23) sont d'épaisseur différente.

8. Matériau composite selon les revendications 1 à 7, caractérisé en ce que le matériau dur est composé de trois tôles d'acier, dont le rapport d'épaisseur s'approche de, ou est exactement égal à 2:1:1, tandis que la tôle d'acier (1) la plus épaisse est reliée à la couche intermédiaire visco-élastique (K 12) qui est conçue pour une température de travail plus basse que celle de l'autre couche intermédiaire.

9. Matériau composite selon les revendications 1 à 8, caractérisé en ce qu'une ou les deux faces extérieures du matériau composite sont enduites d'une couche extérieure absorbant le son.

Fig. 1

Fig. 2